# EUROPEAN PATENT APPLICATION

(11) **EP 4 414 836 A1**
(43) Date of publication of application: **14.08.2024**
(21) Application number: 22882850.5
(22) Date of filing: 18.10.2022
(51) Int. Cl.: G06F 9/455

(54) **CONTAINER ENGINE, CONTAINER ENGINE IMPLEMENTATION METHODS, ELECTRONIC DEVICE AND STORAGE MEDIUM**

(30) Priority: 18.10.2021 CN 202111212628
(71) Applicant: ZTE Corporation, Shenzhen, Guangdong 518057 (CN)
(72) Inventor: ZHANG, Xuyu, Shenzhen, Guangdong 518057 (CN); TAN, Hu, Shenzhen, Guangdong 518057 (CN); LIU, Jianjun, Shenzhen, Guangdong 518057 (CN); CHEN, Junlin, Shenzhen, Guangdong 518057 (CN); LIANG, Xianlong, Shenzhen, Guangdong 518057 (CN); WANG, Liang, Shenzhen, Guangdong 518057 (CN); LI, Longjiang, Shenzhen, Guangdong 518057 (CN); KUANG, Mingfu, Shenzhen, Guangdong 518057 (CN); XUE, Zhihong, Shenzhen, Guangdong 518057 (CN); LI, Yi, Shenzhen, Guangdong 518057 (CN)
(74) Representative: Canzler & Bergmeier Patentanwälte Partnerschaft mbB
(86) International application number: PCT/CN2022/125913
(87) International publication number: WO 2023/066245

(57) **Abstract**

Provided in the present disclosure are a container engine, container engine implementation methods, an electronic device and a computer-readable storage medium. A container engine implementation method which is applied to a first apparatus provided on a management node comprises: sending a container operation request to a second apparatus by using a communication protocol; and receiving, by using the communication protocol, a container operation response sent by the second apparatus. A container engine implementation method which is applied to a second apparatus provided on the management node or a working node comprises: receiving, by using a communication protocol, a container operation request sent by a first apparatus, so as to perform a container operation; and sending a container operation response to the first apparatus by using the communication protocol.

## Description

### CROSS-REFERENCE TO RELATED APPLICATIONS

The present disclosure claims the priority of Chinese patent applications CN202111212628.4 and CN202111212628.4 titled "CONTAINER ENGINE, CONTAINER ENGINE IMPLEMENTATION METHOD, ELECTRONIC DEVICE and STORAGE MEDIUM" filed with the CNIPA on October 18, 2021, the entire contents of which are incorporated in the present disclosure by reference.

### TECHNICAL FIELD

Embodiments of the present disclosure relate to, but are not limited to, the technical field of cloud computing containers, and in particular, to a container engine, a container engine implementation method, an electronic device and a computer-readable storage medium.

### BACKGROUND

As a hot technology in the field of cloud computing, the container technology provides an independent execution environment for service programs, which enables rapid deployment, startup and deletion of containers with zero performance loss of the central processing unit (CPU), the memory and the input/output (IO).

Container engines such as Docker, Containerd and Container Runtime Interface Open (CRI-O) have emerged in the container field. Such container engines externally provide an application programming interface (API) and a command line, through which a container mirror image management function and a container lifetime management function are provided. Generally, current container engines widely used in the industry, such as Docker, Containerd, and CRI-O, are typically deployed on a worker node with a node proxy of a container orchestration system, while only an API of the container orchestration system are deployed on a management node. With such deployment, the container engine and the node proxy of the container orchestration system at the worker node may have a problem of over-consuming CPU and memory resources of the worker node.

### SUMMARY

Embodiments of the present disclosure provide a container engine, container engine implementation methods, an electronic device and a computer-readable storage medium.

In a first aspect, an embodiment of the present disclosure provides a container engine implementation method applied to a first device at a management node, including: sending a container operation request to a second device by a communication protocol; and receiving a container operation response sent from the second device by the communication protocol.

In a second aspect, an embodiment of the present disclosure provides a container engine implementation method applied to a second device at a management node or a worker node, including: receiving a container operation request sent from a first device by a communication protocol, to perform a container operation; and sending a container operation response to the first device by the communication protocol.

In a third aspect, an embodiment of the present disclosure provides an electronic device, including: at least one processor; and a memory having at least one program stored thereon which, when executed by the at least one processor, causes any one of the above container engine implementation methods to be implemented.

In a fourth aspect, an embodiment of the present disclosure provides a computer-readable storage medium having a computer program stored thereon which, when executed by a processor, causes any one of the above container engine implementation methods to be implemented.

In a fifth aspect, an embodiment of the present disclosure provides a container engine, including: a first device and a second device; wherein the first device is arranged at a management node, and the second device is arranged at a management node or a worker node; wherein the first device includes a container engine core module including: a container management submodule configured to send a container operation request to a master proxy submodule; the master proxy submodule configured to send a container operation request to a container operation submodule of the second device by a communication protocol; and receive a container operation response sent from the container operation submodule of the second device by the communication protocol; and wherein the second device includes: a container gasket module and a container runtime module; the container gasket module includes: the container operation submodule configured to receive a container operation request sent from the master proxy submodule of the first device by the communication protocol, and send the container operation request to the container runtime module; and the container runtime module configured to perform a container operation and send a container operation response to the container operation submodule; wherein the container operation submodule is further configured to: send the container operation response to the master proxy submodule of the first device by the communication protocol.

### BRIEF DESCRIPTION OF DRAWINGS

FIG. 1 is a schematic structural diagram of a container engine in the existing art;
FIG. 2 is a block diagram of a container engine according to an embodiment of the present disclosure;
FIG. 3 is a flowchart of a container engine implementation method applied to a management node according to an embodiment of the present disclosure; and
FIG. 4 is a flowchart of a container engine implementation method applied to a worker node according to another embodiment of the present disclosure.

### DETAIL DESCRIPTION OF EMBODIMENTS

To improve understanding of the technical solution of the present disclosure for those skilled in the art, the container engine, the container engine implementation method, the electronic device and the computer-readable storage medium according to the present disclosure will be described below in detail in conjunction with the accompanying drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of at least one associated listed item.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of the stated features, integers, steps, operations, elements, and/or components, but do not preclude the presence or addition of at least one other feature, integer, step, operation, element, component, and/or group thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

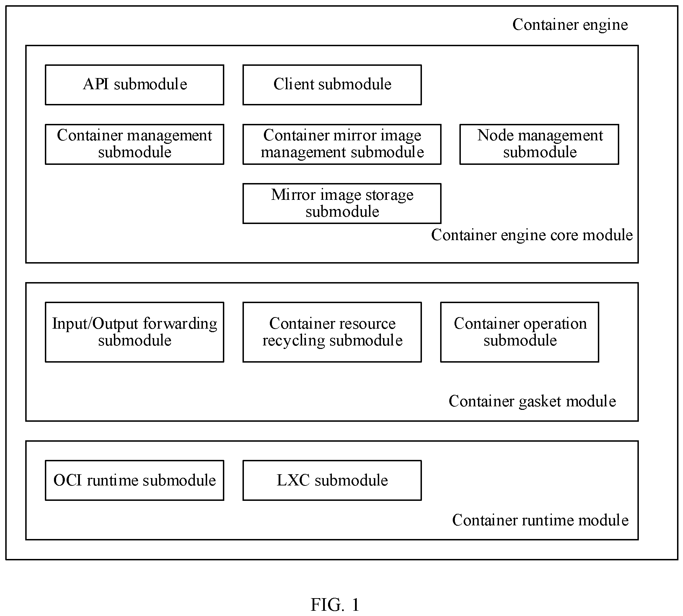

Container engines such as Docker, Containerd and CRI-O have emerged in the container field. Such container engines externally provide an API and a command line, through which a container mirror image management function and a container lifetime management function are provided. Current container engines widely used in the industry, such as Docker, Containerd, and CRI-O, can be each functionally divided into: a container engine core module, a container gasket module, and a container runtime module. As shown in FIG. 1, the container engine core module specifically includes: an API submodule, a client submodule, a container management submodule, a container mirror image management submodule, a node management submodule and a mirror image storage submodule. The container gasket module specifically includes: an input/output forwarding submodule, a container resource recycling submodule, and a container operation submodule. The container runtime module specifically includes: an open container initiative (OCI) runtime submodule or a Linux container (LXC) submodule.

Functions of the submodules will be described below.

The API submodule is responsible for providing a container engine function and a service software interface submodule to the outside (e.g., a container orchestration system).

The client submodule is responsible for a command line tool provided by the container engine for container and mirroring operations.

The container management submodule is responsible for managing lifetime states of the container, such as creation, running, stop, deletion and the like.

The container mirror image management submodule is responsible for managing a mirroring state and a relationship between mirror images.

The node management submodule is responsible for managing node resources, safety states and other information.

The mirror image storage submodule is responsible for managing actual files or devices of mirror images, as well as reading and writing of mirror image contents.

The input/output forwarding submodule is responsible for forwarding an external input to an inside of the container, and forwarding an output from the inside the container to the container engine.

The container resource recycling submodule is responsible for recycling system resources consumed by a dead container.

The container operation submodule is responsible for calling the container runtime module to directly initiate the operations of creating, running, stopping, deleting, checking and the like on the container.

The OCI runtime submodule is a container runtime tool meeting the OCI specification definition, and is responsible for executing specific operations such as creating, running, stopping and deleting, checking containers and the like on an operating system.

The LXC submodule is provided in an open source Linux container project, and is a tool or a dynamic library that can create, run, stop and delete, and check containers on Linux.

The container engine provides an API submodule or a client submodule for the container orchestration system, while the container orchestration system (e.g., K8S (Kubernetes), K3S, etc.) uses the API submodule or the client submodule to instruct the container engine to complete mirror image management functions including mirror image creation, mirror image deletion, mirror image query, mirror image import, mirror image export, mirror image pulled from a warehouse, and mirror image push to a warehouse, and the like, as well as container management functions including creating, deleting, starting, stopping, pausing and restoring a container, querying a container state, and the like. In an implementation of the current container engine, functions which are implemented by calling an underlying operating system, such as creating, deleting, starting, stopping, pausing and restoring a container, and the like, are integrated into the OCI runtime submodule or the LXC submodule. The container engine internally maintains lifetime state management of a container, and the container operations are completed by the container operation submodule calling the OCI runtime submodule or the LXC submodule. To handle resource recycling at an exit time of an internal process of the container and relay a standard input, a standard output and a standard errors of the internal process of the container, the container gasket module is typically designed for the container engine.

The occurrence of the main container orchestration systems, such as K8S, K3S and Docker Swarm, enables more convenient deployment and upgrade of containers in a cluster environment. Therefore, a cloud computing cluster with the container orchestration system as a management entrance and the container engine as a work implementation unit is formed. A service developer can rapidly deploy a group of service processes to internal nodes of the cluster in the form of containers by the container orchestration system. In such a cloud computing cluster, various physical device (e.g., servers or boards, etc.) are divided into management nodes or worker nodes according to different functional units carried thereon. A management node is typically a CPU, a memory, or a server or board with sufficient storage resources, on which a container orchestration system is deployed. A worker node is generally a CPU, a memory, or a server or board device with strained storage resources. A container orchestration proxy and a container engine are deployed on the worker node, and the container is running on the container engine. Depending on indexes such as the reliability and response rate of the cluster design, one or more management nodes may be deployed in the cluster; and depending on a workload index of the cluster, one or more worker nodes may be deployed in the cluster. In extreme cases, there may be a case where the management node and the worker node are located on the same physical device.

At a conventional node of the cloud computing cluster, an API of the container orchestration system is deployed on a management node, and a node proxy and a container engine of the container orchestration system are deployed on a worker node. To create a container, a user can simply send an instruction to the API of the container orchestration system at the management node, and the container orchestration system instructs the container engine to complete the actual container creation, start and management through the node proxy. However, the container engine and the node proxy of the container orchestration system at the worker node have a problem of over-consuming CPU and memory resources of the worker node. Taking the open source Containerd engine as an example, creating and starting 500 containers will consume a memory space of 300 megabytes (M), which is unacceptable for a resource-constrained cluster with an embedded device as a worker node and is especially prominent in the field of internet of things (IOT) clusters. If only an OCI runtime submodule or an LXC submodule is deployed on the worker node, an adaptation module has to be developed to enable the container orchestration system to call the container engine, which involves the problems of large development workload and unstable system.

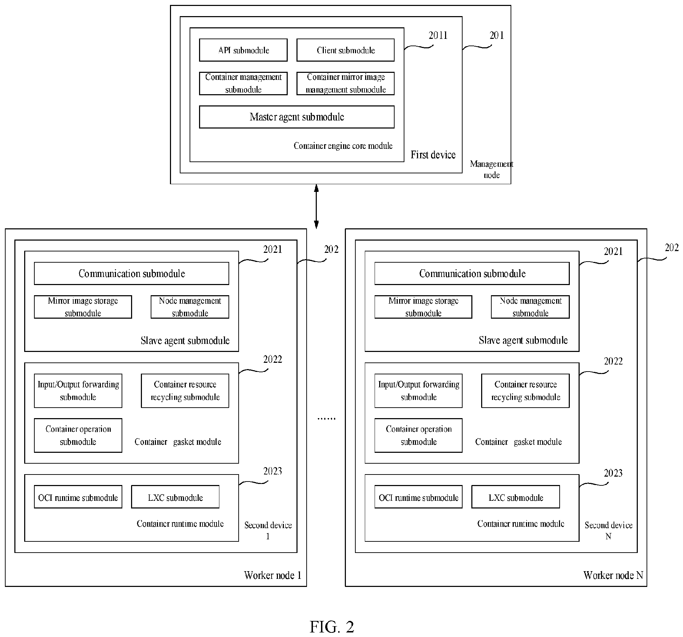

FIG. 2 is a block diagram of a container engine according to an embodiment of the present disclosure. As shown in FIG. 2, in the embodiment of the present disclosure, a deployment structure of the container engine on the cluster is modified so that the container engine is split into a first device 201 and at least one second device 202 which are completely independent.

The first device 201 and the second device 202 are in a master-slave mode, such as a one master one slave mode, a one master more slave mode, and the like. Specifically, the first device 201 is a master device arranged at a management node, and the second device 202 is a slave device arranged at a worker node. In some cases, the first device 201 and the second device 202 may be both arranged at the management node. that is, the management node also serves as a worker node.

The first device 201 and the second device 202 may be linked by any one of a bus, a wired network, or a wireless network.

The first device 201 includes: a container engine core module 2011, and the second device 202 includes: a slave proxy module 2021, a container gasket module 2022, and a container runtime module 2023.

The container engine core module 2011 includes: an API submodule, a client submodule, a container management submodule, a container mirror image management submodule, and a master proxy submodule.

In some exemplary embodiments, the slave proxy module 2021 includes: a communication submodule, a mirror image storage submodule, and a node management submodule. In some other exemplary embodiments, the slave proxy module 2021 includes: a communication submodule and a node management submodule, while the mirror image storage submodule is a separate module. In some other exemplary embodiments, the slave proxy module 2021 includes: a communication submodule and a mirror image storage submodule, while the node management submodule is a separate module. In some other exemplary embodiments, the slave proxy module 2021 includes: a communication submodule, while the mirror image storage submodule and the node management submodule are separate modules.

The container gasket module 2022 includes: an input/output forwarding submodule, a container resource recycling submodule, and a container operation submodule.

The container runtime module 2023 includes: an OCI runtime submodule or an LXC submodule.

In some exemplary embodiments, the first device 201 communicates with the second device 202 by a Remote Procedure Call (RPC) Protocol, that is, calls the second device 202 by RPC to implement corresponding functions. For example, the master proxy submodule communicates with the slave proxy module 2021 by RPC, that is, calls the slave proxy module 2021 by RPC to implement corresponding functions.

In some exemplary embodiments, when the first device 201 and the second device 202 are both arranged at the management node, the first device 201 communicates with the second device 202 by a Unix socket (Sock) or inter-process communication (IPC). For example, the master proxy submodule communicates with the slave proxy module 2021 by Unix Sock or IPC.

In some exemplary embodiments, the communication between the first device 201 and the second device 202 is established with a C/S model. For example, the first device 201 serves as a client, and the second device 202 serves as a server. In this manner, the second device 202 monitors an address and a port of the second device 202 after being started, while the first device 201 acquires the address and the port of the second device 202 after being powered on, and actively establishes a link and a registration with the second device 202 according to the address and the port of the second device 202.

In some exemplary embodiments, when the mirror image storage submodule is a separate module, the slave proxy module 2021 communicates with the mirror image storage submodule by IPC. When the mirror image storage submodule is a submodule of the slave proxy module 2021, the mirror image storage submodule and the slave proxy module 2021 share the same process, so that the process resources occupied by the second device 202 are reduced.

In some exemplary embodiments, when the mirror image storage submodule is a separate module, the master proxy submodule indirectly communicates with the mirror image storage submodule by RPC through relay of the slave proxy module 2021. In other exemplary embodiments, when the mirror image storage submodule is a separate module, the master proxy submodule directly communicates with the mirror image storage submodule by RPC.

In some exemplary embodiments, when the node management submodule is a separate module, the slave proxy module 2021 communicates with the node management submodule by IPC. When the node management submodule is a submodule of the slave proxy module 2021, the node management submodule and the slave proxy module 2021 share the same process, so that the process resources occupied by the second device 202 are reduced.

In some exemplary embodiments, when the node management submodule is a separate module, the master proxy submodule indirectly communicates with the node management submodule by RPC through relay of the slave proxy module 2021. In other exemplary embodiments, when the node management submodule is a separate module, the master proxy submodule directly communicates with the node management submodule by RPC.

In some exemplary embodiments, the container gasket module 2022, the container runtime module 2023, and the slave proxy module 2021 are implemented by independent processes, respectively, where the container gasket module 2022 communicates with the slave proxy module 2021 by IPC, and the container runtime module 2023 communicates with the slave proxy module 2021 by IPC.

In some exemplary embodiments, the master proxy submodule directly communicates with the container gasket module 2022 by ttrpc, thereby speeding up the operation of the container, where ttrpc is a code of an open source software project, such as GRPC for low-memory environments.

In some exemplary embodiments, the master proxy submodule indirectly communicates with the container gasket module 2022 by RPC through relay of the slave proxy module 2021.

In some exemplary embodiments, the container gasket module 2022 calls the container runtime module 2023 to implement container operations, thereby simplifying the slave proxy module 2021.

The above modifications of the container engine architecture may cause changes in part of an internal implementation method of the container engine. The following description is based on the modified internal implementation method of the container engine. It should be noted that instead of a whole implementation process of the container engine, the following method description merely describes some implementation operations different from the internal implementation method of the container engine before modification, and the described implementation method is not used to limit the implementation process of the modified container engine.

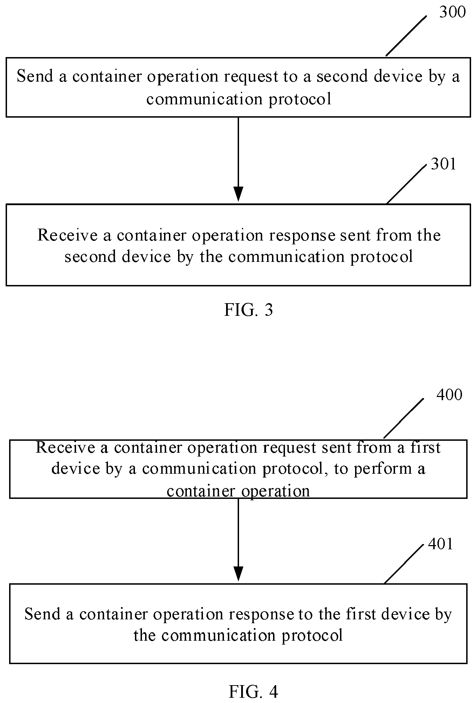

FIG. 3 is a flowchart of a container engine implementation method applied to a management node according to an embodiment of the present disclosure.

In a first aspect, referring to FIG. 3, an embodiment of the present disclosure provides a container engine implementation method applied to a first device at a management node, which includes the following operations 300 to 301.

At operation 300, sending a container operation request to a second device by a communication protocol.

In some exemplary embodiments, the communication protocol includes any one of: RPC, a socket or IPC. Specifically, if the first device and the second device are both arranged at a management node, then the communication protocol used may be a socket or IPC, and if the first device is arranged at a management node and the second device is arranged at a worker node, the communication protocol used may be RPC.

In some exemplary embodiments, when an API request sent from a container orchestration system is received, a container operation request may be sent to the second device by a communication protocol according to the content requested by the API request. If the API request requests a container operation, the container operation request may be directly sent to the second device by the communication protocol to implement the container operation; or a container mirroring operation request may be firstly sent to the second device by the communication protocol to implement a container mirroring operation, and then a container operation request is sent to the second device by the communication protocol to implement the container operation. For example, to create a container, a container mirror image is created before the container. Therefore, before creating the container, an API request may be firstly sent to implement creation of the container mirror image, and then another API request is sent to implement creation of the container, or only one API request is sent to implement creation of both the container mirror image and the container.

In some exemplary embodiments, the API request may be monitored by monitoring a Unix socket file or a specified network port.

In some exemplary embodiments, the container operation includes at least one of: creating, deleting, running, stopping, pausing or restoring a container, creating a new process in a container, querying container information, or the like.

In some exemplary embodiments, the container mirroring operation includes at least one of: creating or deleting a container mirror image, querying container mirror image information, format conversion, creating a container read-write layer, or the like.

At operation 301, receiving a container operation response sent from the second device by the communication protocol.

In some exemplary embodiments, before sending the container operation request to the second device by the communication protocol, the method further includes at least one of:
sending a node state query request to the second device by the communication protocol, and receiving a node state query response sent from the second device by the communication protocol, wherein the node state query response includes: node state information;
sending a first node resource application request to the second device by the communication protocol, and receiving a first node resource application response sent from the second device by the communication protocol;
sending a second node resource application request to the second device by the communication protocol, and receiving a second node resource application response sent from the second device by the communication protocol; or
sending a container mirroring operation request to the second device by the communication protocol, and receiving a container mirroring operation response sent from the second device by the communication protocol.

In some exemplary embodiments, when an API request sent from a container orchestration system is received, a container mirroring operation request may be sent to the second device by the communication protocol according to the content requested by the API request.

In some exemplary embodiments, the method further includes:
receiving a console type parameter that indicates a link type of a standard input, a standard error, and a standard output; and
containing, by the communication protocol, the console type parameter in a container creation request or process creation request to be sent to the second device.

In some exemplary embodiments, the link type of the standard input, the standard error, and the standard output includes: linking the standard input, the standard error, and the standard output to a specified console, linking the standard input, the standard error, and the standard output to a specified file, or no linking.

In some exemplary embodiments, the console type parameter may be sent to the first device by the container orchestration system or any other external system.

In some exemplary embodiments, in the case where the console type parameter indicates that the standard input, the standard error, and the standard output are linked to a specified console, the method further includes:
containing, by the communication protocol, a port of the first device in the container creation request or process creation request to be sent to the second device;
sending, by the communication protocol, a standard input of a container to the second device via the port of the first device; and
monitoring, by the communication protocol, the port of the first device to receive a standard output and a standard error of a container sent from the second device, and outputting the standard output and the standard error of the container to the specified console.

In some exemplary embodiments, in the case where the console type parameter indicates that the standard input, the standard error, and the standard output are linked to a specified file, the method further includes:
containing, by the communication protocol, a file name of the specified file in the container creation request or process creation request to be sent to the second device.

In some exemplary embodiments, when the first device communicates with the second device by a C/S model, a link is created between the first device and the second device, and the first device, when serving as a client, needs to register with the second device. Specifically, before sending the container operation request to the second device by the communication protocol, the method further includes: sending a link creation request to the second device by the communication protocol according to pre-configured address and port of the second device, and receiving a link creation response sent from the second device by the communication protocol to complete creation of the link; and sending a registration command to the second device by the communication protocol, and receiving a registration response sent from the second device by the communication protocol to complete the registration.

In some exemplary embodiments, the address and the port of the second device may be pre-configured in a configuration file.

If two or more second devices are provided, an address and a port for each second device are configured in the configuration file, and the first device establishes a link with each second device and registers with each second device.

In some exemplary embodiments, after receiving the registration response sent from the second device by the communication protocol, the method further includes: periodically sending a keep-alive message to the second device by the communication protocol to implement a health check mechanism.

In some exemplary embodiments, before sending the first node resource application request to the second device, the method further includes:

sending a container gasket module creation request to the second device by the communication protocol, and receiving a container gasket module creation response sent from the second device by the communication protocol.

In some exemplary embodiments, the container gasket module creation response includes: a port for a container gasket module.

FIG. 4 is a flowchart of a container engine implementation method applied to a worker node according to another embodiment of the present disclosure.

In a second aspect, referring to FIG. 4, another embodiment of the present disclosure provides a container engine implementation method applied to a second device at a management node or a worker node, which includes the following operations 400 to 401.

At operation 400, receiving a container operation request sent from a first device by a communication protocol, to perform a container operation.

In some exemplary embodiments, the communication protocol includes any one of: RPC, a socket or IPC. Specifically, if the first device and the second device are both arranged at a management node, then the communication protocol used may be a socket or IPC, and if the first device is arranged at a management node and the second device is arranged at a worker node, the communication protocol used may be RPC.

In some exemplary embodiments, the container operation includes at least one of: creating, deleting, running, stopping, pausing or restoring a container, creating a new process in a container, querying container information, or the like.

At operation 401, sending a container operation response to the first device by the communication protocol.

In some exemplary embodiments, before receiving the container operation request sent from the first device by the communication protocol, the method further includes at least one of:
receiving a node state query request sent from the first device by the communication protocol to query node state information, and sending a node state query response to the first device by the communication protocol, wherein the node state query response includes: node state information;
receiving a first node resource application request sent from the first device by the communication protocol, allocating first node resources for the first device, and sending a first node resource application response to the first device by the communication protocol;
receiving a second node resource application request sent from the first device by the communication protocol, allocating second node resources for the first device, and sending a second node resource application response to the first device by the communication protocol; or
receiving a container mirroring operation request sent from the first device by the communication protocol to perform a container mirroring operation, and sending a container mirroring operation response to the first device by the communication protocol.

In some exemplary embodiments, the container mirroring operation includes at least one of: creating or deleting a container mirror image, querying container mirror image information, format conversion, creating a container read-write layer, or the like.

In some exemplary embodiments, the method further includes:
receiving a console type parameter sent from the first device by the communication protocol. The console type parameter indicates a link type of a standard input, a standard error, and a standard output.

In some exemplary embodiments, in the case where the console type parameter indicates that the standard input, the standard error, and the standard output are linked to a specified console, the method further includes:
receiving a port of the first device sent from the first device by the communication protocol;
receiving, by the communication protocol, a standard input of a container sent from the first device via the port of the first device, and inputting the standard input of the container into the container; and
receiving a standard output and a standard error of a container, and sending, by the communication protocol, the standard output and the standard error of the container to the first device via the port of the first device.

In some exemplary embodiments, in the case where the console type parameter indicates that the standard input, the standard error, and the standard output are linked to a specified file, the method further includes:
receiving a file name of the specified file sent from the first device by the communication protocol; and
creating the specified file with the received file name of the specified file, and writing a standard input and a standard error of a container into the specified file.

In some exemplary embodiments, when the first device communicates with the second device by a C/S model, a link is created between the first device and the second device, and the first device, when serving as a client, needs to register with the second device. Specifically, before receiving the container operation request sent from the first device by the communication protocol, the method further includes: monitoring, by the communication protocol, pre-configured address and port of the second device to receive a link creation request sent from the first device, and sending a link creation response to the first device by the communication protocol to complete creation of the link; and receiving a registration response sent from the second device by the communication protocol, executing the registration command, and sending a registration response to the first device by the communication protocol to complete the registration.

In some exemplary embodiments, the address and the port of the second device maybe pre-configured. The specific configuration mode is not limited, and for example, the configuration may be performed in a configuration file.

If two or more second devices are provided, an address and a port for each second device are configured in the configuration file, and the first device establishes a link with each second device and registers with each second device.

In some exemplary embodiments, after sending the registration response to the first device by the communication protocol, the method further includes: periodically receiving a keep-alive message sent from the first device by the communication protocol to implement a health check mechanism.

In some exemplary embodiments, before receiving the first node resource application request sent from the first device, the method further includes:
receiving a container gasket module creation request sent from the first device by the communication protocol, creating a container gasket module, and sending a container gasket module creation response to the first device by the communication protocol.

In some exemplary embodiments, the container gasket module creation response includes: a port for a container gasket module.

In a third aspect, another embodiment of the present disclosure provides an electronic device, including: at least one processor; and a memory having at least one program stored thereon which, when executed by the at least one processor, causes any one of the above container engine implementation methods to be implemented.

The processor is a device with a data processing capability, including but not limited to a central processing unit (CPU), or the like. The memory is a device with a data storage capability including but not limited to, a random access memory (RAM, more specifically SDRAM, DDR, etc.), a read-only memory (ROM), an electrically erasable programmable read-only memory (EEPROM) or a flash.

In some embodiments, the processor and the memory are connected to each other via a bus, and further connected to other components of a computing device.

In a fourth aspect, another embodiment of the present disclosure provides a computer-readable storage medium having a computer program stored thereon which, when executed by a processor, causes any one of the above container engine implementation methods to be implemented.

In a fifth aspect, as shown in FIG. 2, another embodiment of the present disclosure provides a container engine, including: a first device 201 and a second device 202. The first device is arranged at a management node, and the second device is arranged at a management node or a worker node.

The first device includes a container engine core module 2011 including: a container management submodule configured to send a container operation request to a master proxy submodule; the master proxy submodule configured to send a container operation request to a container operation submodule of the second device by a communication protocol; and receive a container operation response sent from the container operation submodule of the second device by the communication protocol.

The second device 202 includes: a container gasket module 2022 and a container runtime module 2023. The container gasket module 2022 further includes: the container operation submodule configured to receive a container operation request sent from the master proxy submodule of the first device 201 by the communication protocol, and send the container operation request to the container runtime module 2023. The container runtime module 2023 is configured to perform a container operation and send a container operation response to the container operation submodule. The container operation submodule is further configured to: send the container operation response to the master proxy submodule of the first device 201 by the communication protocol.

In some exemplary embodiments, the master proxy submodule directly communicates with the container gasket module 2022 by ttrpc, thereby speeding up operations of the container.

In other exemplary embodiments, the master proxy submodule indirectly communicates with the container gasket module 2022 by RPC through relay of the slave proxy module 2021. In this case, the second device 202 further includes: a slave proxy module 2021 including: a communication submodule configured to enable communication with the master proxy submodule by the communication protocol.

In some exemplary embodiments, when the first device communicates with the second device by a C/S model, a link is created between the first device and the second device, and the first device, when serving as a client, needs to register with the second device. Specifically, the master proxy submodule is further configured to: send, by the communication protocol, a link creation request to the slave proxy module 2021 according to pre-configured address and port of the slave proxy module 2021, and receive a link creation response sent from the slave proxy module 2021 by the communication protocol to complete creation of the link; and send a registration command the slave proxy module 2021 by the communication protocol, and receive a registration response sent from the slave proxy module 2021 by the communication protocol to complete the registration.

The second device 202 further includes: a slave proxy module 2021 configured to monitor, by the communication protocol, pre-configured address and port of the slave proxy module 2021 to receive a link creation request sent from a master proxy submodule, and send a link creation response to the master proxy submodule by the communication protocol to complete creation of the link; and receive a registration command sent from the master proxy submodule by the communication protocol, executing the registration command, and send a registration response to the master proxy submodule by the communication protocol to complete the registration.

In some exemplary embodiments, the address and the port of the slave proxy module 2021 may be pre-configured in a configuration file.

If two or more second devices are provided, an address and a port for each second device are configured in the configuration file, and the first device establishes a link with each second device and registers with each second device.

In some exemplary embodiments, the master proxy submodule is further configured to: periodically send a keep-alive message to the slave proxy module 2021 by the communication protocol to implement a health check mechanism. The slave proxy module 2021 is further configured to: periodically receiving a keep-alive message sent from the master proxy submodule of the first device by the communication protocol to implement a health check mechanism.

In some exemplary embodiments, the container engine core module 2011 of the first device 201 further includes: an API submodule configured to receive an API request sent from a container orchestration system, and send a container operation request to a container management submodule according to the content requested by the API request, or send a container mirroring operation request to a container mirror image management submodule; and the container mirror image management submodule configured to receive the container mirroring operation request sent from the API submodule, send the container mirroring operation request to a mirror image storage submodule of the second device by a communication protocol, and receive a container mirroring operation response sent from the mirror image storage submodule of the second device by the communication protocol. The container management submodule is further configured to: receive the container operation request sent from the API submodule, send the container operation request to a container operation submodule of the second device by a communication protocol, and receive a container operation response sent from the container operation submodule of the second device by the communication protocol.

The second device 202 further includes a slave proxy module 2021 including: a mirror image storage submodule configured to receive a container mirroring operation request sent from the container mirror image management submodule of the first device by a communication protocol, perform a container mirroring operation, and send a container mirroring operation response to the container mirror image management submodule of the first device by the communication protocol. The container operation submodule is further configured to: receive a container operation request sent from the container management submodule of the first device by a communication protocol, perform a container operation, and send a container operation response to the container management submodule of the first device by the communication protocol.

In some exemplary embodiments, the container management submodule is further configured to: send a node state query request to the master proxy submodule; and the master proxy submodule is further configured to: send a node state query request to the node management submodule of the second device by a communication protocol, and receive a node state query response sent from the node management submodule of the second device by the communication protocol, where the node state query response includes: node state information; and send the node state query response to the container management submodule.

The second device 202 further includes a slave proxy module 2021 including: a node management submodule configured to receive a node state query request sent from the master proxy submodule of the first device by a communication protocol, query node state information, and send a node state query response to the master proxy submodule of the first device by the communication protocol, where the node state query response includes: node state information.

In some exemplary embodiments, the container management submodule is further configured to: send a first node resource application request to the master proxy submodule; and the master proxy submodule is further configured to: send the first node resource application request to the node management submodule of the second device by a communication protocol, receive a first node resource application response sent from the node management submodule of the second device by the communication protocol, and send the first node resource application response to the container management submodule.

The second device 202 further includes a slave proxy module 2021 including: a node management submodule configured to receive a first node resource application request sent from the master proxy submodule of the first device by a communication protocol, allocate first node resources for the first device, and send a first node resource application response to the master proxy submodule of the first device by the communication protocol.

In some exemplary embodiments, the container management submodule is further configured to: send a second node resource application request to the master proxy submodule; and the master proxy submodule is further configured to: send the second node resource application request to the node management submodule of the second device by a communication protocol, receive a second node resource application response sent from the node management submodule of the second device by the communication protocol, and send the second node resource application response to the container management submodule.

The second device 202 further includes a slave proxy module 2021 including: a node management submodule configured to receive a second node resource application request sent from the master proxy submodule of the first device by the communication protocol, allocate second node resources for the first device, and send a second node resource application response to the master proxy submodule of the first device by the communication protocol.

In some exemplary embodiments, the container engine core module 2011 further includes: a client submodule configured to receive a console type parameter that indicates a link type of a standard input, a standard error, and a standard output, and send the console type parameter to the container management submodule. The container management submodule is further configured to: send the console type parameter to the master proxy submodule. The master proxy submodule is further configured to: contain, by the communication protocol, the console type parameter in a container creation request or process creation request to be sent to an input/output forwarding submodule of the second device.

The container gasket module 2022 further includes: an input/output forwarding submodule configured to receive a console type parameter, and send the console type parameter to a container operation submodule.

In some exemplary embodiments, the container management submodule is further configured to: in the case where the console type parameter indicates that the standard input, the standard error, and the standard output are linked to a specified console, send a port of the container management submodule to the master proxy submodule. The master proxy submodule is further configured to: contain, by the communication protocol, a port of the container management submodule in the container creation request or process creation request to be sent to the input/output forwarding submodule of the second device; send, by the communication protocol, a standard input of a container to the input/output forwarding submodule of the second device through the port of the container management submodule; and monitor, by the communication protocol, the port of the container management submodule to receive a standard output and a standard error of a container sent from the input/output forwarding submodule of the second device, and send the standard output and the standard error of the container to the container management submodule. The container management submodule is further configured to: output the standard output and the standard error of the container to the specified console.

The input/output forwarding submodule is further configured to: in the case where the console type parameter indicates that the standard input, the standard error, and the standard output are linked to a specified console, receive a port of the container management submodule sent from the master proxy submodule of the first device by a communication protocol; receive, by the communication protocol, a standard input of a container sent from the master proxy submodule of the first device through the port of the container management submodule, and send the standard input of the container to the container operation submodule; and send the standard output and the standard error of the container to the container management submodule through the port of the container management submodule.

The container operation submodule is further configured to: input the standard input of the container into the container; and receive a standard output and a standard error of a container, and send the standard output and the standard error of the container to the input/output forwarding submodule.

In some exemplary embodiments, the container management submodule is further configured to: in the case where the console type parameter indicates that the standard input, the standard error, and the standard output are linked to a specified file, send the console type parameter to the master proxy submodule. The master proxy submodule is further configured to: contain, by the communication protocol, a file name of the specified file in the container creation request or process creation request to be sent to an input/output forwarding submodule of the second device.

The input/output forwarding submodule is further configured to: in the case where the console type parameter indicates that the standard input, the standard error, and the standard output are linked to a specified file, receive a file name of the specified file sent from the first device by the communication protocol; and create the specified file with the received file name of the specified file, and send the file name of the specified file to the container operation submodule. The container operation submodule is further configured to: write a standard input and a standard error of a container into the specified file.

In the container engine provided by the embodiments of the present disclosure, the container engine is split into a first device and a second device, where the first device is arranged at a management node, and the second device is arranged at a management node or a worker node, a container engine core module is retained in the first device, so that a docking manner between the container engine orchestration system and the container engine remains changed, and a container gasket module and a container runtime module are retained in the second device. Since the container gasket module and the container runtime module consume less resources, while the container engine core module consumes more resources, the embodiments of present disclosure can reduce the resource consumption at the worker node while using the original container engine orchestration system to dock with the container engine.

In some exemplary embodiments, the master proxy submodule is further configured to: send a container gasket module creation request to the communication submodule of the second device by a communication protocol, and receive a container gasket module creation response sent from the communication submodule of the second device by the communication protocol.

The slave proxy module 2021 further includes: a communication submodule configured to receive a container gasket module creation request sent from the first device by the communication protocol, create a container gasket module, and send a container gasket module creation response to the first device by the communication protocol.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic memories, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A container engine implementation method applied to a first device at a management node, comprising:
sending a container operation request to a second device by a communication protocol; and
receiving a container operation response sent from the second device by the communication protocol.

2. The container engine implementation method according to claim 1, wherein before sending the container operation request to the second device by the communication protocol, the method further comprises at least one of:
sending a node state query request to the second device by the communication protocol, and receiving a node state query response sent from the second device by the communication protocol, wherein the node state query response comprises: node state information;
sending a first node resource application request to the second device by the communication protocol, and receiving a first node resource application response sent from the second device by the communication protocol;
sending a second node resource application request to the second device by the communication protocol, and receiving a second node resource application response sent from the second device by the communication protocol; or
sending a container mirroring operation request to the second device by the communication protocol, and receiving a container mirroring operation response sent from the second device by the communication protocol.

3. The container engine implementation method according to claim 1, further comprising:
receiving a console type parameter that indicates a link type of a standard input, a standard error, and a standard output; and
containing, by the communication protocol, the console type parameter in a container creation request or process creation request to be sent to the second device.

4. The container engine implementation method according to claim 3, wherein in the case where the console type parameter indicates that the standard input, the standard error, and the standard output are linked to a specified console, the method further comprises:
containing, by the communication protocol, a port of the first device in the container creation request or process creation request to be sent to the second device;
sending, by the communication protocol, a standard input of a container to the second device via the port of the first device; and
monitoring, by the communication protocol, the port of the first device to receive a standard output and a standard error of a container sent from the second device, and outputting the standard output and the standard error of the container to the specified console.

5. The container engine implementation method according to claim 3, wherein in the case where the console type parameter indicates that the standard input, the standard error, and the standard output are linked to a specified file, the method further comprises:
containing, by the communication protocol, a file name of the specified file in the container creation request or process creation request to be sent to the second device.

6. The container engine implementation method according to any one of claims 1 to 5, wherein before sending the container operation request to the second device by the communication protocol, the method further comprises:
sending a link creation request to the second device by the communication protocol according to pre-configured address and port of the second device, and receiving a link creation response sent from the second device by the communication protocol; and
sending a registration command to the second device by the communication protocol, and receiving a registration response sent from the second device by the communication protocol.

7. The container engine implementation method according to any one of claims 1 to 5, wherein before sending the first node resource application request to the second device, the method further comprises:
sending a container gasket module creation request to the second device by the communication protocol, and receiving a container gasket module creation response sent from the second device by the communication protocol.

8. The container engine implementation method according to claim 7, wherein the container gasket module creation response comprises: a port for a container gasket module.

9. The container engine implementation method according to any one of claims 1 to 5, wherein the communication protocol comprises any one of: a remote procedure call (RPC) protocol, a socket, or inter-process communication (IPC).

10. A container engine implementation method applied to a second device at a management node or a worker node, comprising:
receiving a container operation request sent from a first device by a communication protocol to perform a container operation; and
sending a container operation response to the first device by the communication protocol.

11. The container engine implementation method according to claim 10, wherein before receiving the container operation request sent from the first device by the communication protocol, the method further comprises at least one of:
receiving a node state query request sent from the first device by the communication protocol to query node state information, and sending a node state query response to the first device by the communication protocol; wherein the node state query response comprises: the node state information;
receiving a first node resource application request sent from the first device by the communication protocol, allocating first node resources for the first device, and sending a first node resource application response to the first device by the communication protocol;
receiving a second node resource application request sent from the first device by the communication protocol, allocating second node resources for the first device, and sending a second node resource application response to the first device by the communication protocol; or
receiving a container mirroring operation request sent from the first device by the communication protocol to perform a container mirroring operation, and sending a container mirroring operation response to the first device by the communication protocol.

12. The container engine implementation method according to claim 10, further comprising:
receiving a console type parameter sent from the first device by the communication protocol, wherein the console type parameter indicates a link type of a standard input, a standard error, and a standard output.

13. The container engine implementation method according to claim 12, wherein in the case where the console type parameter indicates that the standard input, the standard error, and the standard output are linked to a specified console, the method further comprises:
receiving a port of the first device sent from the first device by the communication protocol;
receiving, by the communication protocol, a standard input of a container sent from the first device via the port of the first device, and inputting the standard input of the container into the container; and
receiving a standard output and a standard error of a container, and sending, by the communication protocol, the standard output and the standard error of the container to the first device via the port of the first device.

14. The container engine implementation method according to claim 12, wherein in the case where the console type parameter indicates that the standard input, the standard error, and the standard output are linked to a specified file, the method further comprises:
receiving a file name of the specified file sent from the first device by the communication protocol; and
creating the specified file with the received file name of the specified file, and writing a standard input and a standard error of a container into the specified file.

15. The container engine implementation method according to any one of claims 10 to 14, wherein before receiving the container operation request sent from the first device by the communication protocol, the method further comprises:
monitoring, by the communication protocol, pre-configured address and port of the second device to receive a link creation request sent from the first device, and sending a link creation response to the first device by the communication protocol; and
receiving a registration command sent from the first device by the communication protocol, executing the registration command, and sending a registration response to the first device by the communication protocol.

16. The container engine implementation method according to any one of claims 10 to 14, wherein before receiving the first node resource application request sent from the first device, the method further comprises:
receiving a container gasket module creation request sent from the first device by the communication protocol, creating a container gasket module, and sending a container gasket module creation response to the first device by the communication protocol.

17. The container engine implementation method according to claim 16, wherein the container gasket module creation response comprises: a port of the container gasket module.

18. The container engine implementation method according to any one of claims 10 to 14, wherein the communication protocol comprises any one of: a remote procedure call (RPC) protocol, a socket, or inter-process communication (IPC).

19. An electronic device, comprising:
at least one processor; and
a memory having at least one program stored thereon which, when executed by the at least one processor, causes the container engine implementation method according to any one of claims 1 to 9, or the container engine implementation method according to any one of claims 10 to 18 to be implemented.

20. A computer-readable storage medium having a computer program stored thereon which, when executed by a processor, causes the container engine implementation method according to any one of claims 1 to 9, or the container engine implementation method according to any one of claims 10 to 18 to be implemented.

21. A container engine, comprising: a first device and a second device; wherein the first device is arranged at a management node, and the second device is arranged at a management node or a worker node;
wherein the first device comprises a container engine core module comprising:
a container management submodule configured to send a container operation request to a master proxy submodule;
the master proxy submodule configured to send a container operation request to a container operation submodule of the second device by a communication protocol; and receive a container operation response sent from the container operation submodule of the second device by the communication protocol; and
wherein the second device comprises: a container gasket module and a container runtime module;
the container gasket module comprises: the container operation submodule configured to receive a container operation request sent from the master proxy submodule of the first device by the communication protocol, and send the container operation request to the container runtime module; and
the container runtime module configured to perform a container operation and send a container operation response to the container operation submodule; wherein
the container operation submodule is further configured to: send the container operation response to the master proxy submodule of the first device by the communication protocol.

22. The container engine according to claim 21, wherein the first device and the second device are linked by any one of a bus, a wired network, or a wireless network.
